# FASCICULE DE BREVET EUROPEEN

(11) **EP 2 771 604 B1**
(45) Date de publication et mention de la délivrance du brevet: **06.12.2017**
(21) Numéro de dépôt: 12781374.9
(22) Date de dépôt: 09.10.2012
(51) Int. Cl.: F16L 3/227, F16L 3/10

(54) **DISPOSITIF SUPPORT DE POSITIONNEMENT POUR CABLES LE LONG DE CONDUITS DE TYPE PIPELINE IMMERGES**
TRÄGERVORRICHTUNG ZUM VERLEGEN VON KABELN ENTLANG UNTERGETAUCHTEN PIPELINE-ROHREN
SUPPORT DEVICE FOR POSITIONING CABLES ALONG SUBMERGED PIPELINE-TYPE PIPES

(30) Priorité: 25.10.2011 FR 1159644
(43) Date de publication de la demande: 03.09.2014
(73) Titulaire: Financiere de Beaumont- FDB, 26100 Romans (FR)
(72) Inventeur: COURBIS, Hervé, F-26600 Beaumont Montheux (FR)
(74) Mandataire: Cabinet Laurent & Charras
(86) Numéro de dépôt international: PCT/FR2012/052285
(87) Numéro de publication internationale: WO 2013/060962

(56) Documents cités:
- WO-A1-97/41375
- WO-A1-2009/122119
- DE-A1- 1 910 241
- DE-A1-102009 024 104
- DE-U- 7 037 959
- FR-A5- 2 025 342
- US-A- 3 084 409

## Description

L'invention se rattache au secteur technique des équipements qui sont disposés le long des conduits de très grandes longueurs du type pipeline immergés pour le forage en mer notamment de pétrole, ces équipements étant destinés à maintenir des câbles ou faisceaux de câbles sur toute la hauteur des dits conduits ou pipelines.

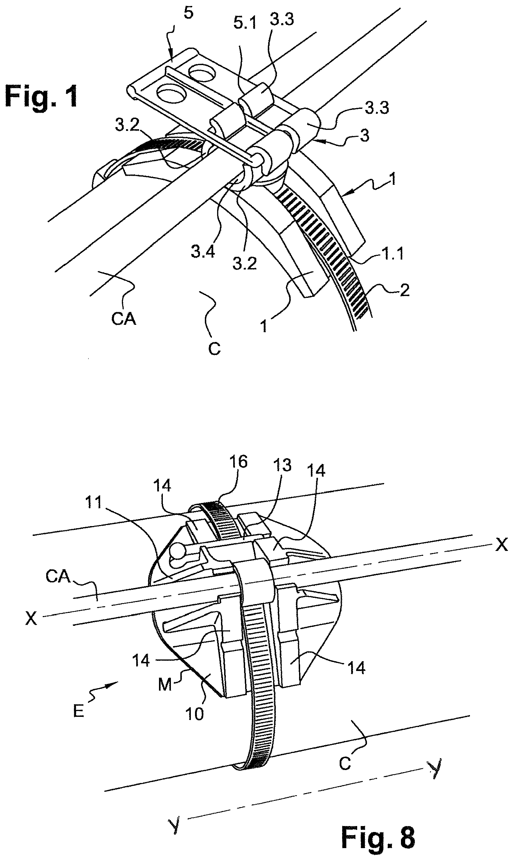

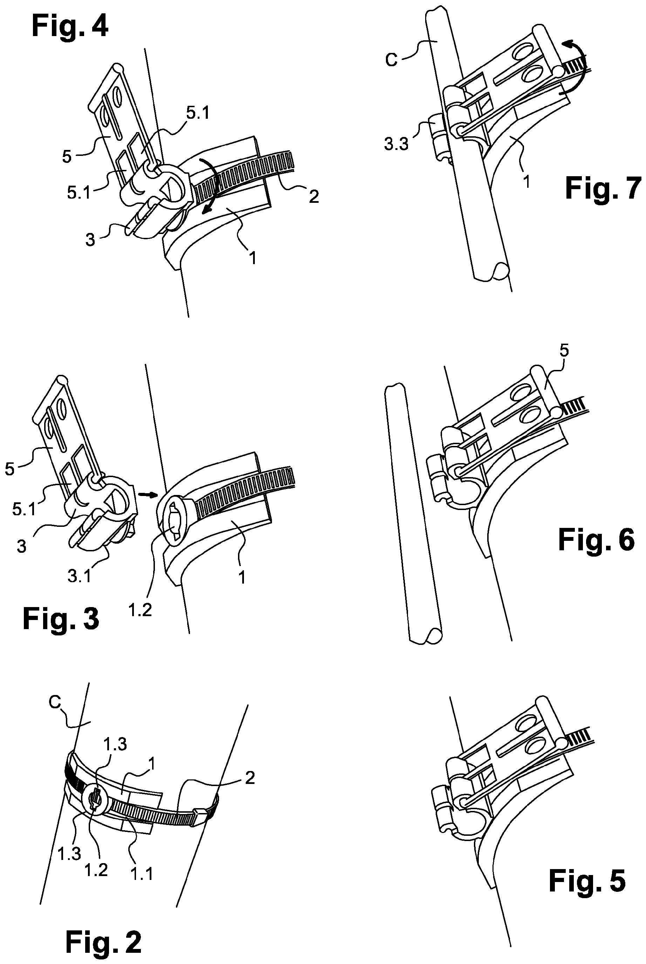

Le Demandeur fabrique et commercialise des équipements de ce type depuis de nombreuses années et on a représenté un équipement ou dispositif support de ce type aux figures 1 à 7, et ce pour faciliter la compréhension et l'intérêt de la présente invention. Le conduit, ou canalisation, ou pipeline est identifié par la référence (C) et il reçoit à intervalles réguliers sur sa longueur des équipements comprenant chacun une base formant un sabot (1) profilée qui est positionnée et fixée à l'aide d'un moyen de fixation sous forme de collier (2) de type connu sous les marques 'SERFLEX ou SMART BAND'. Chaque base présente une forme sensiblement curviligne pour épouser et plaquer contre le profil correspondant du conduit. Chaque base présente dans sa longueur et dans son épaisseur un passage (1.1) pour le centrage et le positionnement du collier (2). Dans sa partie médiane centrale, la base présente une ouverture (1.2) qui est agencée avec une partie centrale circulaire se prolongeant diamétralement en opposition par deux découpes (1.3) supplémentaires pour autoriser l'insertion d'une forme profilée (3.1) complémentaire d'ancrage formée sur la partie inférieure d'un guide (3) récepteur d'un câble (CA). Ce guide est agencé sous forme de deux parties semi-cylindriques (3.2) en regard l'une de l'autre, et dont les extrémités supérieures sont recourbées et orientées pour constituer des lèvres (3.3) formant crochets. Intérieurement, entre les parties (3.2), le guide présente et forme un profil cylindrique (3.4) pour constituer un berceau et logement afin de recevoir le câble (CA) à positionner et à guider. Le guide, par ses lèvres recourbées (3.3), permet d'une part par deux d'entre elles situées d'un même côté en alignement le positionnement et l'articulation d'un moyen de verrouillage sous forme de levier (5) qui est susceptible de pivoter d'un côté à l'autre en venant se clipper et se verrouiller sur les autres lèvres opposées par rapport à sa zone d'articulation et formées sur la deuxième forme semi-cylindrique du collier. On a représenté aux figures 2 à 7 le montage du guide (3), son pivotement à 90° par rapport à la base, à la manière d'un montage à baïonnette pour mettre l'orientation du collier dans le sens longitudinal du conduit (C) Le câble (CA) est ensuite positionné en parallèle le long du conduit dans la partie berceau avec un espace correspondant à l'épaisseur de cet équipement, et le levier de verrouillage (5) est basculé. Le levier (5) présente des ouvertures (5.1) dans son épaisseur s'engageant autour de certaines des lèvres (3.3), du guide (3) en phase de verrouillage.

Cet équipement est couramment exploité par le Demandeur, mais en pratique, ce dernier a constaté certains inconvénients liés à son montage et à son utilisation.

La problématique issue de l'art antérieur est la suivante. La solution technique précitée est mise en oeuvre de la manière suivante. Dans un premier temps le conduit (C) est équipé seulement des sabots (1) et de leur collier de serrage (2) et ce dans une situation à l'air libre sur un bateau par exemple. On procède ensuite dans une seconde phase à la présentation du conduit ou pipeline à la verticale pour être immergé. A cet effet, le conduit passe entre des rollers ou appareils d'entraînement avec des rouleaux qui sont positionnés dans un plan fixe en entourant le conduit ou pipeline et en étant en contact avec ce dernier. Ces rollers et appareils d'entraînement ont pour fonction en mouvement de faire descendre le conduit dans la mer en étant équipé de ses seuls sabots (1). Ensuite un robot ou un plongeur intervient pour la mise en place complémentaire des guides (3) sur chaque sabot (1) en les présentant puis en les orientant pour être dans le sens longitudinal correspondant à l'axe du conduit ou pipeline. Le levier de verrouillage (4) est associé avec le guide (3). Ainsi, après immersion du ou des conduits, le robot est assujetti à des fonctions non seulement de pose du guide (3) et de son levier (4) de verrouillage mais aussi il doit positionner le câble (CA) dans le guide et assurer le relevage et verrouillage du dit levier. Cela signifie que le robot est agencé avec des moyens permettant les différentes fonctions précitées.

Ces différentes fonctions données au robot sont nombreuses et sont nécessaires de par la conception du dispositif support ainsi décrit et représenté figure 1. En effet, notamment, le passage du conduit (C) entre les rollers ou rouleaux d'entraînement induit une limitation des zones potentielles d'accrochage de sorte que la conception des guides (3) et leur levier de verrouillage (5) est un empêchement majeur à la préparation et mise en place des dispositifs "tout équipés" sur le conduit ou pipeline. C'est une gêne très sérieuse.

Par ailleurs, ces différentes opérations ne restent pas toujours pratiques à réaliser et au surplus, le levier de verrouillage étant en débordement de la partie guide il y a une gêne au déplacement du robot qui peut venir quelquefois buter contre l'équipement.

En outre, un tel agencement ne permet que le seul montage d'un câble (CA). Il y a donc lieu de multiplier les agencements si un ou plusieurs câbles (CA) sont destinés à être montés en parallèle le long du conduit ou pipeline.

Un autre inconvénient peut être celui lié au débordement extérieur du levier de verrouillage (5) de chaque équipement. En effet, tout choc contre celui-ci pour des raisons quelconques, tel que par exemple un choc avec le robot, peut entraîner son déverrouillage et l'échappement du câble. Même si cette situation présente un risque très limité, le risque demeure et est lié aussi à l'expertise ou non des personnes qui gèrent la manipulation du robot.

On connaît par le brevet US 3 084 409 un système qui permet de fixer un tube dans une base avec un levier de verrouillage qui est en position de débordement en saillie une fois fermé et comprend un nombre de composants élevés. Ce système est sans rapport avec l'application de l'invention. On connaît aussi par le brevet WO/9741375 un système de fixation par suspension avec des boulons pour tendre le système. Le document DE 7037959 décrit un système de fixation de tube où le tube passe dans une boucle en métal que l'on peut tendre avec une vis pour enserrer le tube, ceci dans une construction complexe.

La démarche du Demandeur a donc été de remédier à ces inconvénients en proposant une solution optimisée facilitant l'intervention du robot lors de la pose des câbles (CA) le long des conduits du type pipeline. Dans le cadre de cette démarche, le Demandeur a aussi été amené à vouloir réduire, voire à supprimer, toute partie apparente de l'équipement qui pourrait être en contact avec le robot et qui entraînerait un déverrouillage susceptible de libérer le câble contenu, et aussi tout contact avec les rollers ou rouleaux d'entraînement.

La démarche du Demandeur a été aussi de rechercher une solution pour limiter les interventions du robot et de prévoir un agencement à l'air libre (sur le bateau généralement) d'un maximum de composants et de leurs fonctions finales sur le conduit ou pipeline avant immersion.

La démarche du Demandeur a aussi été de vouloir optimiser la fabrication de ces équipements avec une réduction du nombre de composants qui sont au nombre de trois selon la pratique antérieure avec le sabot de centrage, le guide, ainsi que le levier de verrouillage, et aussi ainsi de faciliter la manipulation de ces composants.

La démarche du Demandeur a aussi été de considérer la possibilité de positionner le long du conduit ou pipeline au moins un et généralement plusieurs câbles le long du conduit ou pipeline, dans des conditions d'aménagement modulaires appropriées.

Selon une première caractéristique de l'invention,
décrite par la revendication 1, le dispositif support pour le positionnement pour câbles le long de conduits de type pipelines immergés comprenant une base profilée sous forme de module comprenant une base, un canal en forme de berceau récepteur du câble, disposé dans l'axe longitudinal médian du module et parallèle à l'axe du conduit, le module assurant les fonctions de centrage et de positionnement par rapport et sur le conduit, et de réception et d'articulation d'un second moyen sous forme de levier de verrouillage basculant, et autorisant la fixation d'un collier de serrage autour du conduit, le dispositif étant remarquable en ce que le module est agencé pour assurer le positionnement et le guidage d'un collier de serrage autour du conduit, et comporte dans un plan perpendiculaire au canal en berceau une ouverture définie entre des couples de portées proéminentes profilées, espacées et disposées deux à deux en regard du berceau autorisant entre elles et par rapport à elles d'une part le positionnement et fixation du collier de serrage et d'autre part le passage du dit levier de verrouillage, son guidage, son articulation, sa protection et son verrouillage en deux positions pour fixer ou libérer le câble, le levier de verrouillage pivotant autour de l'axe du câble entre les deux couples de portées, de façon à pouvoir fermer ou ouvrir l'accès au câble, les formes extérieures du module avec ses portées propres étant aptes à supprimer toute partie en saillie pouvant constituer des parties d'accrochage, le dispositif support comprenant ainsi deux composants, le module et le levier de verrouillage.

Ces caractéristiques et d'autres encore ressortiront bien de la suite de la description.

Pour fixer l'objet de l'invention illustrée d'une manière non limitative aux figures des dessins où :
La figure 1 est une vue en perspective d'un équipement avec le guide de positionnement de câble le long du conduit, fabriqué par le Demandeur au titre de l'art antérieur,
Les figures 2, 3, 4, 5, 6 et 7 sont des vues à caractère schématique illustrant les différentes phases de montage et de positionnement des composants relatifs à l'équipement de la figure 1,
La figure 8 est une vue illustrant le positionnement d'un équipement selon l'invention le long d'un conduit ou pipeline,

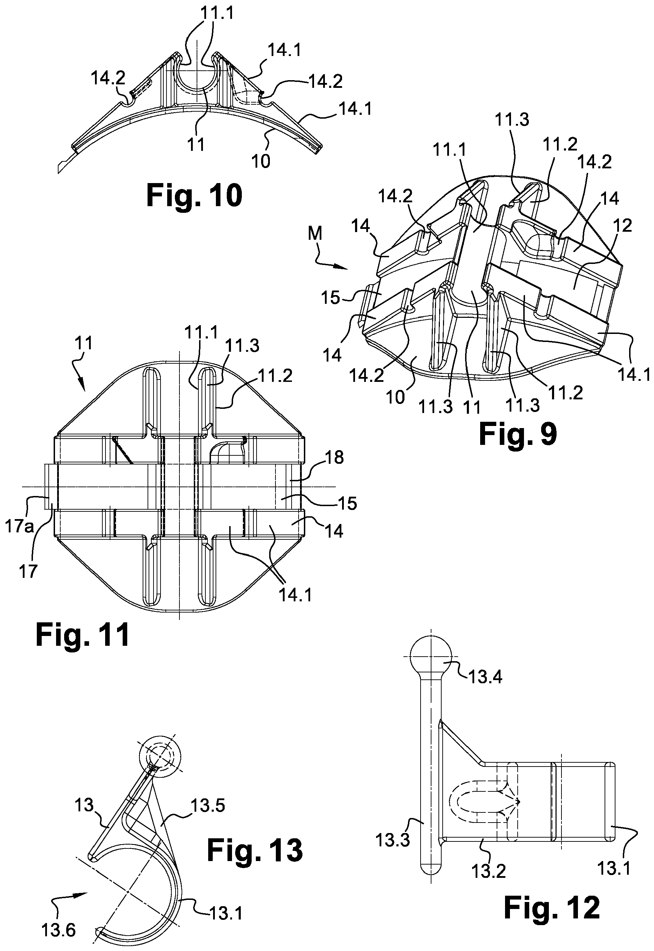

La figure 9 est une vue en perspective du sabot mis en oeuvre par l'invention et positionné sur le conduit,
La figure 10 est une vue de profil du sabot selon la figure 9,
La figure 11 est une vue de dessus du sabot selon la figure 9,
La figure 12 est une vue de profil du levier de verrouillage associé au sabot,
La figure 13 est une vue du levier en position vue de dessus,
La figure 14 est une vue de l'équipement selon la figure 8 en position déverrouillée,
La figure 15 est une vue de dessus de l'équipement en position verrouillée,
La figure 16 est une vue de côté illustrant dans une variante de réalisation l'assemblage de deux équipements pour la tenue de deux câbles en position parallèle par rapport au conduit,
La figure 17 est une vue de dessus selon la figure 16,
La figure 18 est une vue en perspective illustrant le positionnement de deux modules assemblés réceptionnant chacun un câble avant basculement du moyen de verrouillage en position des câbles.
La figure 19 est une vue en perspective illustrant un module selon l'invention telle que réalisée et destinée à être accouplée avec d'autres modules pour le positionnement de plusieurs câbles, et dans une autre variante de configuration obtenue par moulage,
La figure 20 est une vue de dessus du verrou seul dans une autre variante de réalisation,
La figure 21 est une vue de profil du verrou seul, selon la figure 20,

Afin de rendre plus concret l'objet de l'invention, on le décrit maintenant d'une manière non limitative illustrée aux figures des dessins.

Le dispositif support selon l'invention permettant le positionnement d'au moins un câble (CA) le long d'un conduit (C) ou pipeline destiné à être immergé est référencé dans son ensemble par (E).

Il comprend ainsi un module (M) qui est réalisé en un matériau élastomère avec une certaine rigidité, pouvant être par exemple celui connu dans le commerce par la marque COURBHANE du Demandeur. Ce module (M) est monobloc et assure en lui-même les différentes fonctions à savoir celle de centrage et de positionnement par rapport et sur le conduit (C), celle de positionnement et de guidage du collier de serrage autour du dit conduit, celle de la réception du câble, et celle de la réception et de l'articulation du moyen de verrouillage. Le module, qui est réalisé monobloc et unitaire, assure ces quatre fonctions par des agencements particuliers permettant leur intégration. En outre, ce module est agencé et profilé pour éviter toute aspérité susceptible de gêner ou de nuire au déplacement du robot positionnant le câble (CA) dans le conduit. (C). Ainsi qu'il apparaîtra dans la suite de la description, le module est agencé pour être positionné seul sur le conduit (C) à un endroit donné, ou être accouplé à d'autres modules (M) pour constituer une batterie de modules permettant le positionnement en parallèle de plusieurs câbles (CA).

Chaque module est établi sous une forme profilée générale polygonale par exemple quadrangulaire à pans coupés avec une base (10) formant sabot susceptible de venir en appui contre la face en regard du conduit (C) ou pipeline. Il comprend, dans des plans perpendiculaires et formé de manière monobloc avec la base ou sabot, un canal en forme de berceau (11) disposé dans l'axe (xx) longitudinal médian du module et parallèle à l'axe (yy) du conduit (C) pour recevoir un câble (CA). Ce canal (11) présente ainsi des parois intérieures (11.1) semi-cylindriques pour permettre la tenue du conduit (CA). Les parois extérieures (11.2) du dit canal sont dans un plan sensiblement vertical par rapport à la partie base (10) et elles ont un chant supérieur (11.3) penté en forme de rampe. Dans un plan perpendiculaire au dit canal est prévue une ouverture (12) pour le positionnement et l'articulation du moyen de verrouillage (13) basculant autour du câble (CA). La dite ouverture (12) est définie par des couples de portées (14) proéminentes, profilées, disposées deux à deux en regard du canal (11). Ces couples de portées sont parallèles et espacés en définissant entre eux l'ouverture (12) précitée. Ces couples de portées sont disposés en saillie par rapport à la base avec des pans supérieurs (14.1) inclinés s'élevant de l'extrémité périphérique de la base jusqu'au canal (11) de retenue du câble (CA). Entre ces couples de portées, la base du module présente un chemin de guidage (15) pour le positionnement d'un collier de serrage (16) de type connu comme rappelé précédemment. Les dites portées en saillie (14) sont aménagées dans leur épaisseur et sensiblement dans leur partie médiane avec des logements apparents transversaux (14.1) qui autorisent le centrage, le positionnement et le verrouillage en position du moyen de verrouillage (13) formant verrou. Ces logements (14.1) sont établis dans l'épaisseur des dites portées et transversalement. Le moyen de verrouillage (13) formant verrou est établi d'une manière particulière avec à sa base une partie bague (13.1) non fermée qui est susceptible d'autoriser par l'ouverture restante (13.6) son passage et son clipsage autour du câble (CA). Cette partie bague (13.1) entoure ainsi le câble et a pour fonction d'assurer le blocage en position du câble par rapport au module, ou permettre sa mise en place et/ou évacuation. Le moyen de verrouillage (13) présente ainsi outre sa partie bague (13.1) formée en extrémité une partie médiane méplate (13.2) formant bras de levier et en extrémité une tige transversale (13.3) dont au moins une extrémité présente une forme arrondie en saillie (13.4) de section sensiblement supérieure au diamètre de la tige précitée. Cette tige selon la position du moyen (13) est destinée à être engagée dans les logements récepteurs formés à cet effet sur les portées (14). Pour assurer une bonne tenue, les dits logements ont en extrémité une forme recourbée pour assurer le clipsage et le maintien en position de la tige du moyen de verrouillage (13). La profondeur des logements (14.1) est établie de sorte que le moyen de verrouillage (13) vient s'intégrer et s'incorporer dans le volume défini par les portées (14) du module et ce, sans en déborder extérieurement. Le moyen de verrouillage (13) peut inclure une nervure de rigidification (13.5) à partir de sa partie médiane (13.2) reliant la partie tige (13.3) et la partie bague (13.1). Cette pièce est réalisée monobloc par moulage.

Ce moyen de verrouillage est ainsi agencé de manière particulière car il est destiné principalement pour être saisi par le robot de pose par le biais de pinces qui lui sont associées. Ce moyen de verrouillage peut aussi être manipulé par des plongeurs dans certains cas et il est donc nécessaire que sa manipulation soit aisée.

Comme représenté aux dessins, les portées (14) sont étudiées pour passer dans les rollers et résister à leur pression évaluée à 12 Tonnes. Ces portées (14) sont des agencements essentiels de l'invention. Ces portées (14) sont établies avec des profils intérieurs permettant le passage du levier de verrouillage (13) en s'adaptant de manière complémentaire aux formes de ce dernier et notamment dans la partie médiane de liaison entre la configuration en bague non fermée entourant le câble et la partie tige elle-même de préhension et de verrouillage et en participant à son verrouillage, les formes extérieures du module avec ses portées propres étant aptes à supprimer toute partie en saillie pouvant constituer des parties d'accrochage.

Cette solution technique permet de réaliser un module (M) qui n'a pas d'aspérités apparentes lorsque le moyen de verrouillage (13) est basculé dans une position ou dans une autre pour le verrouillage ou la libération du câble précité. Le module monobloc présente ainsi des formes avec des pans coupés au niveau des portées (14) et aussi des parois du canal de maintien du câble qui facilitent le passage du robot lors des opérations de positionnement d'enlèvement du câble (CA) et aussi lors du passage entre les rollers ou rouleaux d'entraînement lors de l'immersion du conduit ou pipeline entièrement pré-équipé.

Le dispositif support comprend ainsi seulement deux composants, le module (M) moulé monobloc et le moyen de verrouillage (13) lequel vient s'accoupler très facilement sur le module en entourant le câble (CA) à positionner. La manipulation du moyen de verrouillage est aisée, sa mise en place autour du câble également, et son clipsage dans l'une ou l'autre position sur les portées (14) conformées sur le module.

On a ainsi représenté aux figures des dessins la configuration du dispositif support et de ses deux composants, module et levier de verrouillage, avec les positions relatives du moyen de verrouillage.

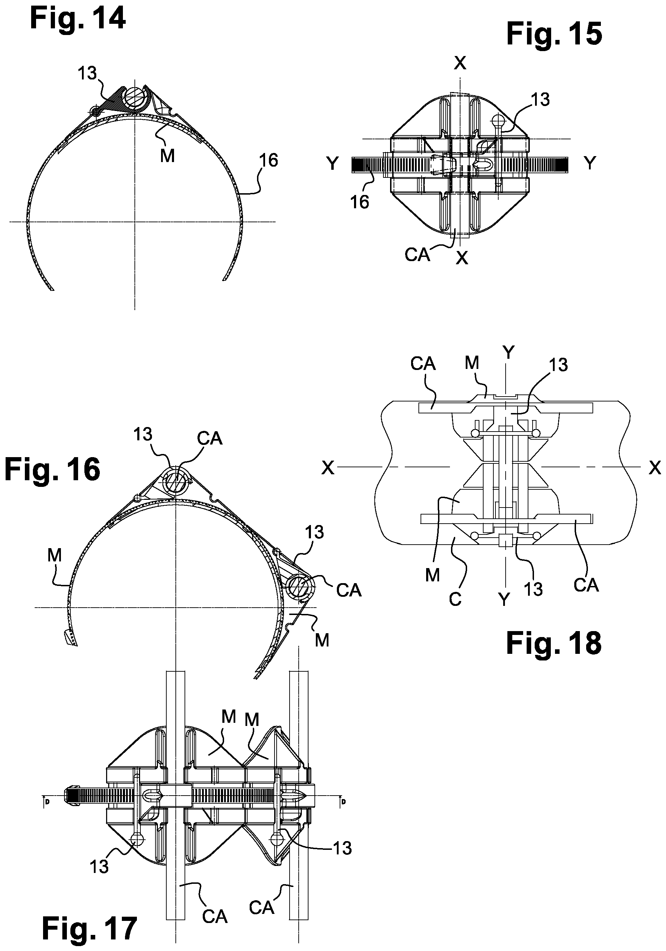

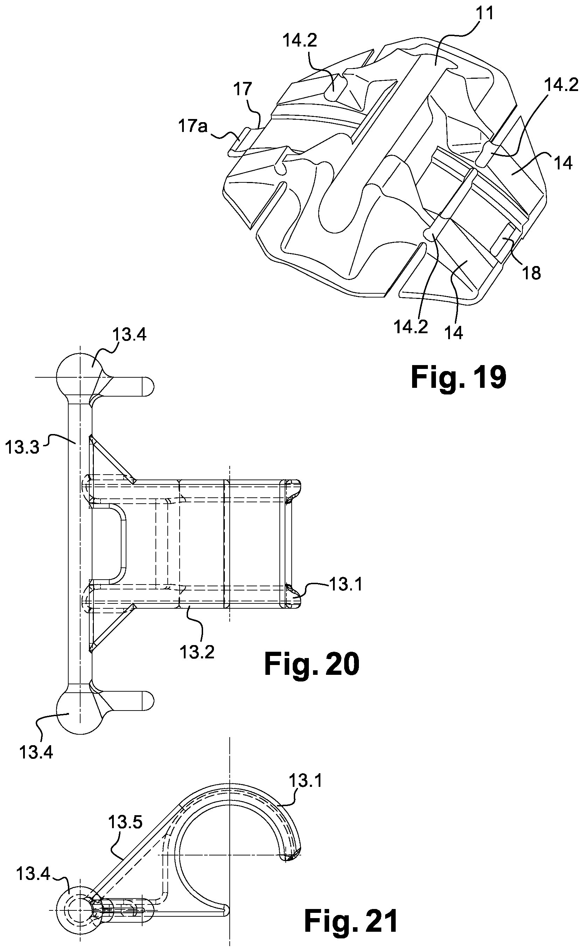

Comme illustré aux figures 16, 17, 18, 19, 20, les modules (M) sont agencés pour permettre leur accouplement en série afin d'entourer tout ou partie de la périphérie du conduit (C) ou pipeline en vue du positionnement en parallèle de plusieurs câbles (CA). Ainsi, chaque module présente au niveau de la zone de passage du collier de serrage dans le chemin de guidage et près des extrémités de la partie base correspondante une ouverture oblongue (18) transversale dans la largeur et l'épaisseur du dit passage de collier, et à l'opposé en débordement de la base, une forme en crochet (17) avec une extrémité (17a) bombée susceptible de pénétrer dans l'ouverture oblongue (18) formée sur le module suivant de manière à obtenir un accouplement ferme mais temporaire. Le collier de serrage assure ainsi le maintien de plusieurs modules successifs qui sont mis en prolongement les uns des autres. Le levier de verrouillage (13) peut en variante présenter sur sa tige deux parties bombées en saillie (13.4) pour faciliter la préhension et la manipulation du levier.

Les avantages ressortent bien de l'invention. On souligne plus particulièrement la nouvelle conception du dispositif support de positionnement des câbles le long de conduits de pipelines avec seulement deux composants (module et levier) avec une configuration de forme permettant de supprimer toute aspérité ou gêne au passage du robot d'intervention, et entre les rollers lors de la descente du conduit ou pipeline en mer.

En outre, selon l'invention, et par rapport à l'art antérieur, c'est le dispositif complet dans son ensemble qui est positionné avant l'immersion du conduit en intégrant le module et le levier de verrouillage qui forment un tout sans aspérités et sans gêne lors du passage entre les rollers, et lors de l'utilisation du robot lors de la mise en place du câble ou de son enlèvement. Le levier de verrouillage est intégré dans le volume du module aussi bien avant ou après positionnement du câble. Les portées (14) ont été étudiées spécifiquement pour permettre le libre passage des rollers ou rouleaux d'entraînement et du robot.

On souligne également la possibilité de mettre en oeuvre très facilement une batterie de plusieurs modules autour d'une périphérie du conduit pour le positionnement en parallèle de plusieurs câbles.

On souligne également la conception particulière du module avec ses portées (14) qui sont agencées pour verrouiller en position le levier (13) aussi en situation de blocage et retenue du câble que de libéralisation de celui-ci. En effet, la tige associée au levier et bloquée en position dans les logements formés sur chaque couple de portées dans une position ou dans une autre du dit levier. Dans cette mise en oeuvre un seul collier de serrage est utilisé pour assurer la tenue des différents modules consécutifs.

## Revendications

1. Dispositif support pour le positionnement de câbles le long de conduits de type pipelines immergés comprenant un module (M) agencé avec une base (10), un canal en forme de berceau (11) récepteur d'un câble (CA), disposé dans l'axe (xx) longitudinal médian du module et destiné à être parallèle à l'axe (yy) du conduit (C), le module remplissant les fonctions de centrage et de positionnement par rapport et sur le conduit (C), et de réception et d'articulation d'un second moyen sous forme de levier de verrouillage basculant (13), et permettant la fixation d'un collier de serrage autour du conduit, le dispositif support comprend deux composants, le module (M) et le levier de verrouillage (13), le module (M) est agencé pour permettre le positionnement et le guidage d'un collier de serrage autour du conduit (C), et comporte dans un plan perpendiculaire au canal en berceau (11) une ouverture (12) définie entre des couples de portées (14) proéminentes profilées, espacées et disposées deux à deux en regard du berceau (11) autorisant entre elles et par rapport à elles d'une part le positionnement et fixation du collier de serrage et d'autre part le passage du dit levier de verrouillage (13), son guidage, son articulation, sa protection et son verrouillage en deux positions pour fixer ou libérer le câble, l'ouverture (12) est définie par des couples de portées (14) parallèles et espacées disposées en saillie par rapport à la base avec des pans supérieurs (14.1) inclinés s'élevant de l'extrémité périphérique de la base jusqu'au berceau (11) de retenue du câble, et entre les couples de portées (14) la base du module présente un chemin de guidage (15) pour le passage d'un collier de serrage, et les dites portées (14) en saillie sont aménagées dans leur épaisseur dans leur partie médiane avec des logements apparents transversaux autorisant le centrage, le positionnement et le verrouillage du levier de verrouillage (13), le levier de verrouillage (13) formant verrou présente à sa base une partie bague (13.1) non fermée autorisant par son ouverture restante (13.6) son passage et son clipsage autour du câble (CA), la bague (13.1) se prolonge par une partie médiane méplate (13.2) formant bras de levier et en extrémité une tige transversale (13.3) avec au moins en extrémité une forme arrondie en saillie (13.4) de préhension et de manipulation, et ledit levier de verrouillage (13) pivote autour de l'axe du câble entre les deux couples de portées (14), de façon à pouvoir fermer ou ouvrir l'accès au câble, les formes extérieures du module (M) avec ses portées propres supprimant toute partie en saillie pouvant constituer des parties d'accrochage.

2. Dispositif support selon la revendication 1, **caractérisé en ce que** le canal (11) en forme de berceau présente des parois intérieures (11.1) semi-cylindriques, des parois extérieures (11.2) dans un plan sensiblement vertical par rapport à la partie base et un chant supérieur (11.3) penté en forme de rampe, **et en ce que** dans un plan perpendiculaire au dit canal (11) est formée une ouverture (12) pour le passage et l'articulation du moyen de verrouillage (13).

3. Dispositif support selon la revendication 1, **caractérisé en ce que** le levier de verrouillage (13) est monobloc et obtenu par moulage et comprend une nervure de rigidification (13.5) à partir de sa partie médiane (13.2) reliant la partie tige (13.3) et la partie bague (13.1).

4. Dispositif support selon la revendication 1, **caractérisé en ce que** les logements (14.1) formés sur les portées (14) ont une profondeur pour la réception de la partie tige (13.3) du levier, en présentant une partie recourbée pour assurer le clipsage et le maintien en position de la dite tige.

5. Dispositif support selon la revendication 1, **caractérisé en ce que** chaque module présente sur la partie chemin de guidage et en prolongement d'un côté une ouverture oblongue (18) transversale, dans la largeur et l'épaisseur du dit chemin et à l'opposé en débordement de la base, une forme en crochets (17) avec une extrémité (17a) bombée pour pénétrer dans l'ouverture oblongue (18).

## Patentansprüche

1. Haltevorrichtung zum Positionieren von Kabeln entlang von Rohrleitungen, etwa in Form von unter Wasser geführten Pipelines, die aus einem Modul (M) besteht, das mit einer Basis (10) und zur Aufnahme eines Kabels (CA) mit einem Kanal in Form einer Mulde (11) ausgebildet und in der Mittellängsachse (xx) des Moduls angeordnet ist und parallel zur Achse (yy) der Rohrleitung (C) verlaufen soll, wobei das Modul hinsichtlich und auf der Rohrleitung (C) die Funktionen zum Zentrieren und Positionieren und zur Aufnahme und Anlenkung eines zweiten Mittels in Form eines schwenkbaren Verriegelungshebels (13) erfüllt und die Befestigung einer Klemmschelle um die Rohrleitung ermöglicht, wobei die Haltevorrichtung zwei Komponenten umfasst, und zwar das Modul (M) und den Verriegelungshebel (13), wobei das Modul (M) zum Positionieren und Führen einer Klemmschelle um die Rohrleitung (C) ausgebildet ist und in einer senkrecht zum Kanal in Form einer Mulde (11) angeordneten Ebene eine Öffnung (12) aufweist, die zwischen profilierten überstehenden, beabstandeten und paarweise der Mulde (11) gegenüberliegend angeordneten Paaren von Auflageflächen (14) ausgebildet ist, welche untereinander und im Verhältnis zueinander das Positionieren und Befestigen der Klemmschelle einerseits und den Durchlass des Verriegelungshebels (13), seine Führung, seine Anlenkung, seinen Schutz und seine Verriegelung in zwei Positionen zur Befestigung oder Freisetzung des Kabels andererseits zulassen, wobei die Öffnung (12) durch Paare von Auflageflächen (14) gebildet wird, die parallel und beabstandet und bezogen auf die Basis überstehend mit oberen schrägen, vom peripheren Ende der Basis bis zur Kabelhaltemulde (11) reichenden Flächen (14.1) ausgebildet sind, und zwischen den Paaren von Auflageflächen (14) weist die Basis des Moduls einen Führungspfad (15) zum Durchlass einer Klemmschelle auf, und die überstehenden Auflageflächen (14) sind in ihrer Tiefe in ihrem mittleren Bereich mit sichtbaren, quer verlaufenden Aufnahmen versehen, die das Zentrieren, Positionieren und Verriegeln des Verriegelungshebels (13) ermöglichen, wobei der den Riegel bildende Verriegelungshebel (13) an seiner Basis einen nicht geschlossenen Ringbereich (13.1) aufweist, der über seine verbleibende Öffnung (13.6) seinen Durchlass und sein Verklipsen um das Kabel (CA) erlaubt, wobei der Ring (13.1) um einen mittleren abgeflachten Bereich (13.2) verlängert wird, der einen Hebelarm und am Ende einen Querstift (13.3) bildet mit zumindest am Ende einer überstehenden, abgerundeten Greif- und Manipulationsform (13.4), und der Verriegelungshebel (13) wird um die Achse des Kabels zwischen den beiden Paaren von Auflageflächen (14) geschwenkt, so dass der Zugang zum Kabel geschlossen oder geöffnet werden kann, wobei die äußeren Formen des Moduls (M) mit ihren eigenen Auflageflächen sämtliche Überstandsbereiche beseitigen, die Festhakbereiche bilden könnten.

2. Haltevorrichtung nach Anspruch 1, **dadurch gekennzeichnet, dass** der muldenförmige Kanal (11) halbzylindrische Innenwände (11.1), Außenwände (11.2) in einer zum Basisbereich im Wesentlichen senkrechten Ebene und eine geneigte, rampenförmige obere Kante (11.3) aufweist, und dass in einer zum Kanal (11) senkrechten Ebene eine Öffnung (12) zum Durchlass und Anlenken des Verriegelungsmittels (13) ausgebildet ist.

3. Haltevorrichtung nach Anspruch 1, **dadurch gekennzeichnet, dass** der Verriegelungshebel (13) aus einem Stück besteht und durch Formguss erhalten wird und ab seinem mittleren Bereich (13.2) eine Versteifungsrippe (13.5) aufweist, die den Stiftbereich (13.3) mit dem Ringbereich (13.1) verbindet.

4. Haltevorrichtung nach Anspruch 1, **dadurch gekennzeichnet, dass** die auf den Auflageflächen (14) ausgebildeten Aufnahmen (14.1) eine Tiefe zur Aufnahme des Stiftbereichs (13.3) des Hebels aufweisen und mit einem gewölbten Bereich zum Anklipsen und Festhalten dieses Stifts versehen sind.

5. Haltevorrichtung nach Anspruch 1, **dadurch gekennzeichnet, dass** jedes Modul im Bereich des Führungspfades und in Verlängerung einer Seite eine transversale längliche Öffnung (18) aufweist, und zwar in der Breite und der Tiefe dieses Pfades, und gegenüberliegend, bezogen auf die Basis überstehend, eine Hakenform (17) mit einem gewölbten Ende (17a) zum Eindringen in die längliche Öffnung (18) aufweist.

## Claims

1. Support device for positioning cables along submerged pipeline-type pipe comprising a module (M) arranged with a base (10), a channel in cradle form (11) receiving a cable (CA), positioned in the central longitudinal axis (xx) of the module and intended to be parallel to the axys (yy) of the duct (C), the module performing the functions of centering and positioning in relation to and on the duct (C), as well as receiving and articulating with a second mean in the form of a rocking locking lever (13), and permitting the attachment of a securing collar around the duct, the support device comprises two components, the module (M) and the locking lever (13), the module (M) is arranged to ensure the positioning and the guidance of a securing collar around the duct (C), and comprises in a plane perpendicular to the cradling channel (11) an opening (12) provided between pairs of profiled prominent spans (14), spaced and located two by two opposite the cradle (11) allowing between them and in relation to them firstly the positioning and fixing of the securing collar and secondly the passage of the said locking lever (13), as well as its guidance, its articulation, its protection, its locking in two positions to secure or release the cable, the opening (12) is formed by pairs of parallel and spaced spans (14) located protuding in relation to the base with inclined upper bevels (14.1) rising from the peripheral extremity of the base as far as the cable retention cradle (11), and between the pairs of spans (14) the base of the module has a guideway (15) for the passage of a securing collar, and the said protuding spans (14) are arranged within their thickness within their median part with transversal visible housings allowing the centering, the positioning and the locking of the locking lever (13), the locking lever (13) forming a bolt has at its base an unclosed ring part (13.1) allowing through its remaining opening (13.6) its passage and clipping around the cable (CA), the ring (13.1) is prolonged by a flat central part (13.2) forming a lever arm and at the end a transversal rod (13.3) with at least at the end a rounded protruding form (13.4) for gripping and handling, and the said locking lever (13) pivotes around the axis of the cable between the two pairs of spans (14), in a manner allowing to close or open access to the cable, the exterior forms of the module (M) with its own spans eliminating any protuding part that might constitute points of entanglement.

2. Support device according to claim 1, **characterized in that** the channel (11) in the form of a cradle has semi-cylindrical interior walls (11.1), exterior walls (11.2) in an essentially-vertical plane in relation to the base part and a sloped upper edge (11.3) in the form of a ramp, **and in that** in a plane perpendicular to the said channel (11) an opening (12) is formed for the passage and articulation of the locking mean (13).

3. Support device according to claim 1, **characterized in that** the locking lever is one-piece and produced by molding and comprises a stiffening rib (13.5) extending from its central part (13.2) connecting the rod part (13.3) and the ring part (13.1).

4. Support device according to claim 1, **characterized in that** the housings (14.1) formed on the spans (14) have a depth for the accommodation of the rod part (13.3) of the lever, presenting a curved part to ensure clipping and holding in position of the said rod.

5. Support device according to claim 1, **characterized in that** each module has on the guideway part and extending from one side a transversal oblong opening (18), within the width and thickness of the said guideway and on the opposite side protruding from the base, a hook-shaped element (17) with one domed end (17a) designed to enter the oblong opening (18).
